# EUROPEAN PATENT APPLICATION

(11) **EP 3 940 695 A1**
(43) Date of publication of application: **19.01.2022**
(21) Application number: 19920221.9
(22) Date of filing: 15.03.2019
(51) Int. Cl.: G10L 17/22

(54) **EDITING SUPPORT PROGRAM, EDITING SUPPORT METHOD, AND EDITING SUPPORT DEVICE**

(71) Applicant: FUJITSU LIMITED, Kanagawa 211-8588 (JP)
(72) Inventor: SANKODA, Satoru, Kawasaki-shi, Kanagawa 211-8588 (JP); HAMADA, Yusuke, Kawasaki-shi, Kanagawa 211-8588 (JP)
(74) Representative: Hoffmann Eitle
(86) International application number: PCT/JP2019/010793
(87) International publication number: WO 2020/188622

(57) **Abstract**

There is provided an editing support program for causing a computer to execute a process including displaying, on a display unit, information indicating a speaker identified with regard to a sentence generated on the basis of voice recognition in association with a section within the sentence, the section corresponding to the identified speaker; in a case where a first editing process that edits an identification result of the speaker occurs and respective speakers of adjacent two or more sections are common due to the first editing process, displaying the adjacent two or more sections in a combined state on the display unit; and in a case where a start point of a section to be subject to a second editing process that edits the identification result of the speaker is specified with regard to a specific section within the combined two or more sections and a location corresponding to a start point of any of the two or more sections before being combined is present between the specified start point and an end point of the combined two or more sections, applying the second editing process to a section from the specified start point to the location corresponding to the start point of any of the two or more sections.

## Description

### TECHNICAL FIELD

The present case relates to an editing support program, an editing support method, and an editing support device.

### BACKGROUND

It is known that voice data including speech data of a plurality of speakers is reproduced, and a user transcribes the speech data of each speaker into text to set a speaker name indicating the speaker in each speech data. Furthermore, it is also known that voice data is classified on the basis of voice characteristics, and optional speaker identification information is obtained for each classified voice data (e.g., see Patent Document 1).

Patent Document 1: Japanese Laid-open Patent Publication No. 2014-38132

### SUMMARY

### [TECHNICAL PROBLEM]

However, the speaker identification information obtained from the voice characteristics may change at times depending on the physical condition of the speaker and the like. As a result, there is a possibility that the speaker identification information represents a wrong speaker. In this case, there is a problem that the user takes time and effort for the editing process of the speaker identification information.

In view of the above, in one aspect, it aims to improve the convenience of an editing process for an identification result of a speaker.

### [SOLUTION TO PROBLEM]

According to one embodiment, an editing support program causes a computer to execute a process including: displaying, on a display unit, information indicating a speaker identified with regard to a sentence generated on the basis of voice recognition in association with a section within the sentence, the section corresponding to the identified speaker; in a case where a first editing process that edits an identification result of the speaker occurs and respective speakers of adjacent two or more sections are common due to the first editing process, displaying the adjacent two or more sections in a combined state on the display unit; and in a case where a start point of a section to be subject to a second editing process that edits the identification result of the speaker is specified with regard to a specific section within the combined two or more sections and a location corresponding to a start point of any of the two or more sections before being combined is present between the specified start point and an end point of the combined two or more sections, applying the second editing process to a section from the specified start point to the location corresponding to the start point of any of the two or more sections.

### [ADVANTAGEOUS EFFECTS OF INVENTION]

It is possible to improve the convenience of an editing process for an identification result of a speaker.

### BRIEF DESCRIPTION OF DRAWINGS

FIG. 1 is a diagram of an exemplary terminal device.
FIG. 2 is an exemplary hardware configuration of the terminal device.
FIG. 3 is an exemplary block diagram of the terminal device.
FIG. 4 is a flowchart (No. 1) illustrating exemplary operation of the terminal device.
FIG. 5 is a flowchart (No. 2) illustrating exemplary operation of the terminal device.
FIG. 6 is an exemplary portal screen.
FIG. 7 is exemplary speaker data.
FIG. 8 is exemplary sentence data before update according to a first embodiment.
FIG. 9 is an exemplary editing support screen.
FIG. 10A, FIG. 10B and 10C are diagrams (No. 1) for explaining exemplary editing work according to an exemplary embodiment.
FIG. 11 is a diagram for explaining an example of updating sentence data.
FIG. 12A, FIG. 12B and 12C are diagrams (No. 2) for explaining exemplary editing work according to an exemplary embodiment.
FIG. 13 is exemplary division start point location data.
FIG. 14A and FIG. 14B are diagrams (No. 3) for explaining exemplary editing work according to an exemplary embodiment.
FIG. 15 is a diagram for explaining another example of updating sentence data.
FIG. 16A and FIG. 16B are diagrams for explaining exemplary editing work according to a comparative example.
FIG. 17A is exemplary sentence data before update according to a second embodiment. FIG. 17B is exemplary updated sentence data according to the second embodiment.
FIG. 18 is an exemplary editing support system.

### DESCRIPTION OF EMBODIMENTS

### (First Embodiment)

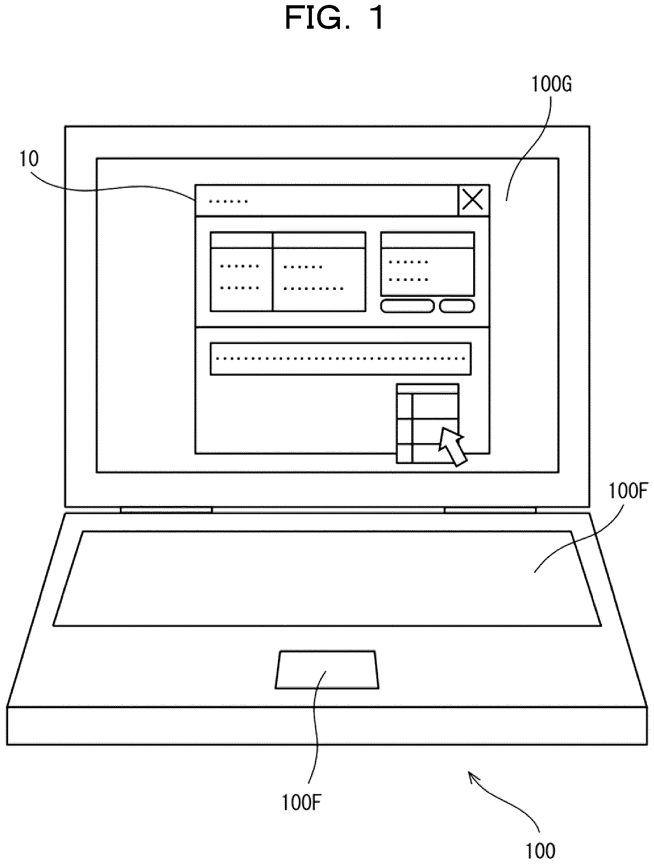

FIG. 1 is a diagram of an example of a terminal device 100. The terminal device 100 is an example of an editing support device. Although a personal computer (PC) is illustrated as an example of the terminal device 100 in FIG. 1, it may be a smart device such as a tablet terminal. The terminal device 100 includes a keyboard and a pointing device (hereinafter simply referred to as a keyboard) 100F. The terminal device 100 includes a display 100G. The display 100G may be a liquid crystal display, or may be an organic electroluminescence (EL) display.

The display 100G displays various screens. Although details will be described later, the display 100G displays an editing support screen 10, for example. The editing support screen 10 is a screen that supports editing of a speaker identified with regard to a sentence generated on the basis of voice recognition. Identification of the speaker may be performed using artificial intelligence (AI), or may be performed using a predetermined voice model defined in advance without using AI.

A user who uses the terminal device 100 confirms candidates for the speaker displayed on the editing support screen 10, and operates the keyboard 100F to select one of the candidates from the candidates for the speaker. As a result, the terminal device 100 edits the unedited speaker identified on the basis of AI or the like to the selected candidate speaker. In this manner, the user is enabled to easily edit the speaker by using the editing support screen 10. Note that, although a preparer of minutes of a conference will be described as an example of the user in the present embodiment, the user is not particularly limited to such a preparer. For example, the user may be a producer of broadcast subtitles, a person in charge of audio recording in a call center, or the like.

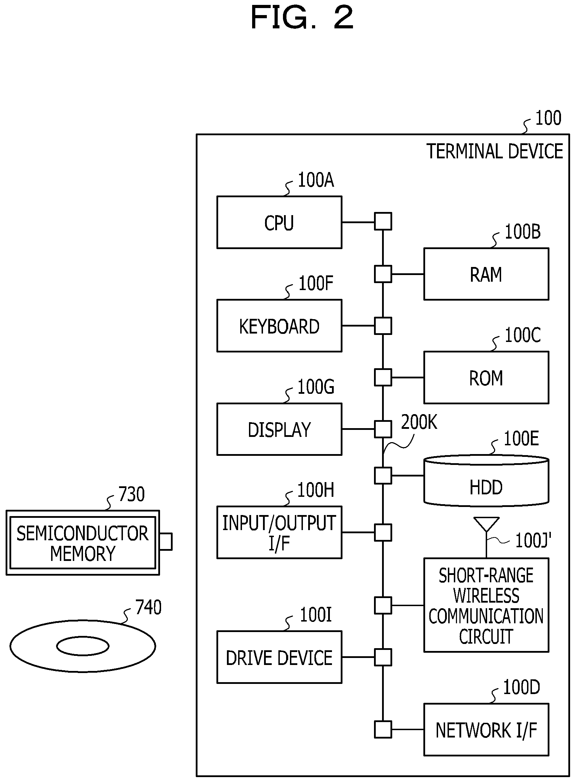

Next, a hardware configuration of the terminal device 100 will be described with reference to FIG. 2.

FIG. 2 is an exemplary hardware configuration of the terminal device 100. As illustrated in FIG. 2, the terminal device 100 includes at least a central processing unit (CPU) 100A as a hardware processor, a random access memory (RAM) 100B, a read only memory (ROM) 100C, and a network interface (I/F) 100D. Furthermore, as described above, the terminal device 100 also includes the keyboard 100F and the display 100G.

Moreover, the terminal device 100 may also include at least one of a hard disk drive (HDD) 100E, an input/output I/F 100H, a drive device 100I, and a short-range wireless communication circuit 100J as needed. The CPU 100A to the short-range wireless communication circuit 100J are connected to each other by an internal bus 100K. For example, the terminal device 100 may be constructed by a computer. Note that a micro processing unit (MPU) may be used as a hardware processor instead of the CPU 100A.

A semiconductor memory 730 is connected to the input/output I/F 100H. Examples of the semiconductor memory 730 include a universal serial bus (USB) memory, a flash memory, and the like. The input/output I/F 100H reads a program and data stored in the semiconductor memory 730. The input/output I/F 100H has a USB port, for example. A portable recording medium 740 is inserted into the drive device 100I. Examples of the portable recording medium 740 include a removable disk such as a compact disc (CD)-ROM and a digital versatile disc (DVD). The drive device 100I reads a program and data recorded in the portable recording medium 740. The short-range wireless communication circuit 100J is an electric circuit or an electronic circuit that implements short-range wireless communication, such as Wi-Fi (registered trademark) and Bluetooth (registered trademark). An antenna 100J' is connected to the short-range wireless communication circuit 100J. A CPU that implements a communication function may be used instead of the short-range wireless communication circuit 100J. The network I/F 100D has a local area network (LAN) port, for example.

Programs stored in the ROM 100C and the HDD 100E are temporarily stored in the RAM 100B described above by the CPU 100A. The program recorded in the portable recording medium 740 is temporarily stored in the RAM 100B by the CPU 100A. With the stored program executed by the CPU 100A, the CPU 100A implements various functions to be described later, and executes various kinds of processing to be described later. Note that the program only has to be in accordance with flowcharts to be described later.

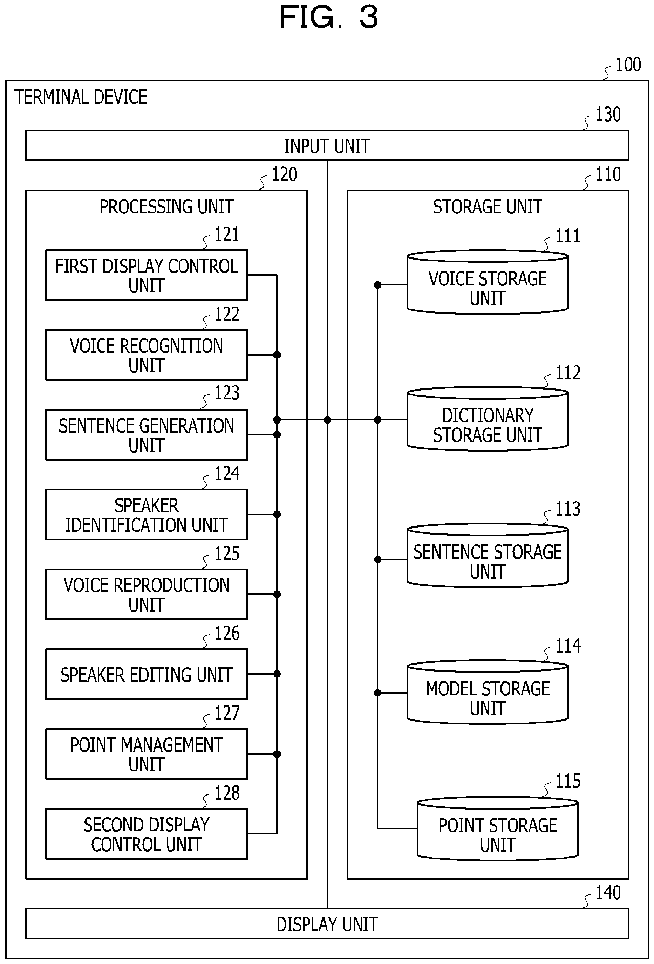

Next, a functional configuration of the terminal device 100 will be described with reference to FIG. 3.

FIG. 3 is an exemplary block diagram of the terminal device 100. FIG. 3 illustrates main functions of the terminal device 100. As illustrated in FIG. 3, the terminal device 100 includes a storage unit 110, a processing unit 120, an input unit 130, and a display unit 140. The storage unit 110 may be constructed by the RAM 100B or the HDD 100E described above. The processing unit 120 may be constructed by the CPU 100A described above. The input unit 130 may be constructed by the keyboard 100F described above. The display unit 140 may be constructed by the display 100G described above. Therefore, the storage unit 110, the processing unit 120, the input unit 130, and the display unit 140 are connected to each other.

Here, the storage unit 110 includes, as constituent elements, a voice storage unit 111, a dictionary storage unit 112, a sentence storage unit 113, a model storage unit 114, and a point storage unit 115. The processing unit 120 includes, as constituent elements, a first display control unit 121, a voice recognition unit 122, a sentence generation unit 123, and a speaker identification unit 124. Furthermore, the processing unit 120 includes, as constituent elements, a voice reproduction unit 125, a speaker editing unit 126, a point management unit 127, and a second display control unit 128.

Each of the constituent elements of the processing unit 120 accesses at least one of the respective constituent elements of the storage unit 110 to execute various kinds of processing. For example, when the voice reproduction unit 125 detects an instruction for reproducing voice data, it accesses the voice storage unit 111 to obtain voice data stored in the voice storage unit 111. When the voice reproduction unit 125 obtains the voice data, it reproduces the voice data. Note that other constituent elements will be described in detail at the time of describing operation of the terminal device 100.

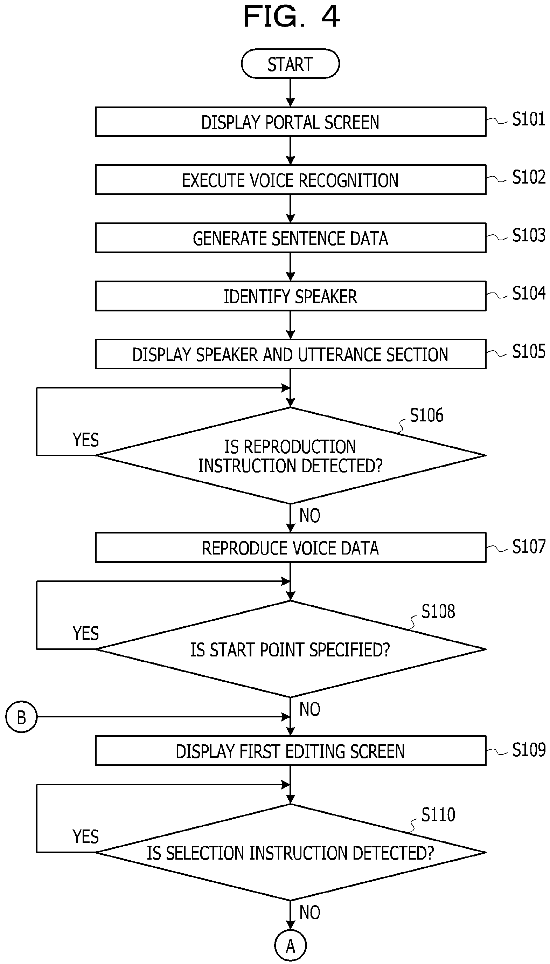

Next, operation of the terminal device 100 will be described with reference to FIGs. 4 to 15.

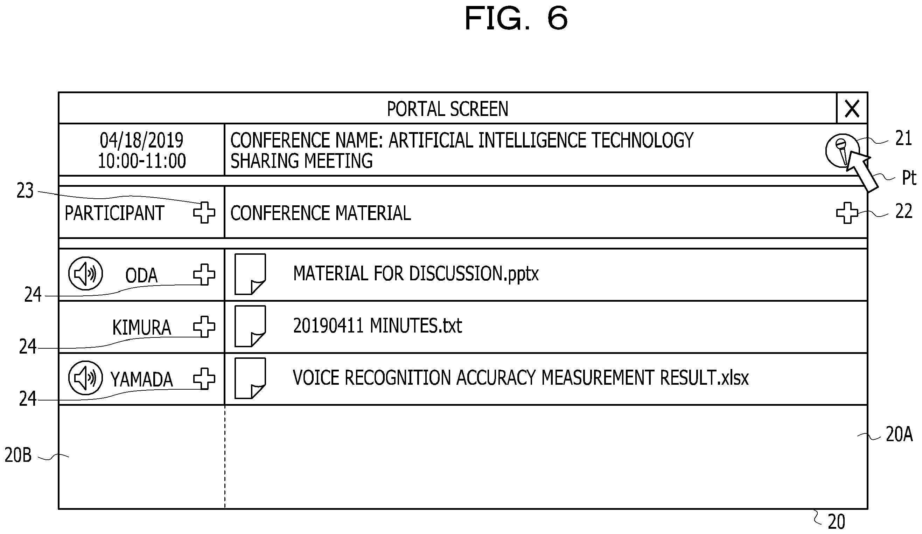

First, as illustrated in FIG. 4, the first display control unit 121 displays a portal screen (step S101). More specifically, when the first display control unit 121 detects an instruction for starting a portal screen output from the input unit 130, it displays a portal screen on the display unit 140. Accordingly, the display unit 140 displays a portal screen 20 as illustrated in FIG. 6. The portal screen 20 includes a first registration button 21, a second registration button 22, a third registration button 23, and a plurality of fourth registration buttons 24.

The first registration button 21 is a button for registering voice data of a conference. In the case of registering voice data of a conference, the user prepares voice data of a conference recorded in advance in the terminal device 100. When the user performs operation of pressing the first registration button 21 with a pointer Pt, the first display control unit 121 detects the pressing of the first registration button 21. When the first display control unit 121 detects the pressing of the first registration button 21, it saves the voice data of the conference prepared in the terminal device 100 in the voice storage unit 111.

The second registration button 22 is a button for registering material data related to material of a conference. In the case of registering material data, the user prepares material data of a conference in advance in the terminal device 100. When the user performs operation of pressing the second registration button 22 with the pointer Pt, the first display control unit 121 detects the pressing of the second registration button 22. When the first display control unit 121 detects the pressing of the second registration button 22, it displays the material data prepared in the terminal device 100 in a first display area 20A in the portal screen 20.

The third registration button 23 is a button for registering participants of a conference. In the case of registering participants of a conference, the user performs operation of pressing the third registration button 23 with the pointer Pt. When the user performs operation of pressing the third registration button 23, the first display control unit 121 detects the pressing of the third registration button 23. When the first display control unit 121 detects the pressing of the third registration button 23, it displays, on the display unit 140, a registration screen (not illustrated) for registering the participants of the conference as speakers. When the user inputs a speaker (specifically, information indicating a speaker name) in the conference on the registration screen, the first display control unit 121 displays participant data including the input speaker in a second display area 20B in the portal screen 20. At the same time, the first display control unit 121 generates speaker ID, and saves it in the model storage unit 114 in association with the input speaker. The speaker ID is information that identifies the speaker. As a result, the model storage unit 114 stores the speaker ID and the speaker in association with each other.

The fourth registration buttons 24 is each a button for registering voice data of a speaker. In the case of registering voice data of a speaker, the user prepares various voice data of the speaker recorded in advance in the terminal device 100. A microphone may be connected to the terminal device 100, and the voice data obtained from the microphone may be used. When the user performs operation of pressing the fourth registration button 24 related to the speaker to be registered with the pointer Pt, the first display control unit 121 detects the pressing of the fourth registration button 24. When the first display control unit 121 detects the pressing of the fourth registration button 24, it outputs the voice data prepared in the terminal device 100 to the speaker identification unit 124.

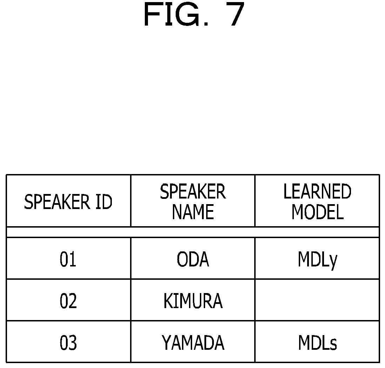

The speaker identification unit 124 generates a learned model in which characteristics of the voice of the speaker are machine-learned on the basis of the voice data of the speaker output from the first display control unit 121. The speaker identification unit 124 saves, in the model storage unit 114, the generated learned model in association with the speaker ID of the speaker corresponding to the voice data to be learned. As a result, as illustrated in FIG. 7, the model storage unit 114 stores speaker data in which the speaker ID, the speaker, and the learned model are associated with each other. When the model storage unit 114 stores the speaker data, the first display control unit 121 displays a registration mark RM in the participant data related to the speaker to be registered. The registration mark RM is a mark indicating that the voice data of the speaker has been registered by the model storage unit 114 having stored the learned model.

Returning to FIG. 4, when the processing of step S101 is complete, the voice recognition unit 122 then executes voice recognition (step S102). For example, the voice recognition unit 122 refers to the voice storage unit 111 to determine whether or not the voice storage unit 111 stores the voice data of the conference. When the voice recognition unit 122 determines that the voice storage unit 111 stores the voice data of the conference, it performs voice recognition on the voice data of the conference stored in the voice storage unit 111, and generates character string data. More specifically, the voice recognition unit 122 specifies a plurality of characters on the basis of the voice of the speaker included in the voice data of the conference, arranges the specified characters in a time series, and assigns character ID and a time code to each character to generate character string data. When the voice recognition unit 122 generates the character string data, it outputs the generated character string data to the sentence generation unit 123. Note that the voice recognition unit 122 includes a plurality of voice recognition engines, and each of them generates corresponding character string data. Examples of the voice recognition engine include AmiVoice (registered trademark) and the like.

When the processing of step S102 is complete, the sentence generation unit 123 then generates sentence data (step S103). More specifically, when the sentence generation unit 123 receives the character string data output by the voice recognition unit 122, it refers to the dictionary storage unit 112 to perform morphological analysis on the character string data. The dictionary storage unit 112 stores a morpheme dictionary. Various words and phrases are stored in the morpheme dictionary. For example, the morpheme dictionary stores words and phrases such as "yes", "indeed", "material", and "question". Therefore, when the sentence generation unit 123 refers to the dictionary storage unit 112 and performs the morphological analysis on the character string data, it generates sentence data in which the character string data is divided into a plurality of word blocks. When the sentence generation unit 123 generates sentence data, it saves the generated sentence data in the sentence storage unit 113 in association with an identifier of each word block. As a result, the sentence storage unit 113 stores the sentence data.

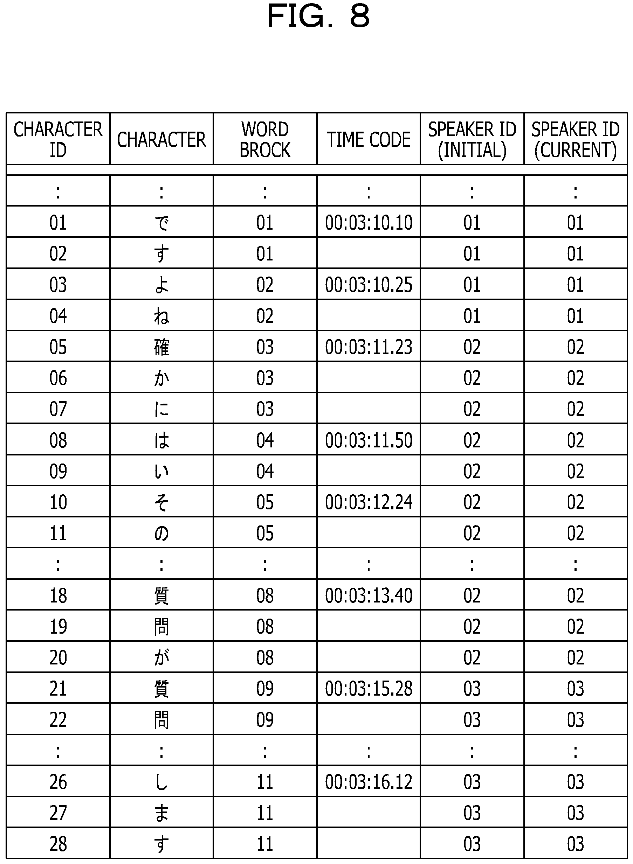

When the processing of step S103 is complete, the speaker identification unit 124 then identifies the speaker (step S104). More specifically, the speaker identification unit 124 refers to the model storage unit 114 to compare the learned model stored in the model storage unit 114 with the voice data of the conference stored in the voice storage unit 111. The speaker identification unit 124 compares the learned model with the voice data of the conference, and in the case of detecting a voice part corresponding to (e.g., common to, similar to, or the like) the learned model in the voice data of the conference, it identifies the time code and the speaker ID associated with the learned model. In this manner, the speaker identification unit 124 identifies each speaker of various voice parts included in the voice data of the conference. When the speaker identification unit 124 identifies the speaker ID and the time code, it associates the identified speaker ID with the sentence data stored in the sentence storage unit 113 on the basis of the time code. As a result, as illustrated in FIG. 8, the sentence storage unit 113 stores the sentence data associated with the speaker ID.

As illustrated in FIG. 8, the sentence data includes, as constituent elements, character ID, a character, a word block, a time code, speaker ID (initial), and speaker ID (current). In particular, an identifier of a word block is registered in the word block. The speaker ID of the speaker first identified by the speaker identification unit 124 is registered in the speaker ID (initial). The speaker ID after editing the speaker is registered in the speaker ID (current). The same speaker ID is registered in the speaker ID (initial) and the speaker ID (current) immediately after the speaker identification unit 124 identifies the speaker. The sentence storage unit 113 stores such sentence data. Note that, in a case where the time code assigned to each character is the same as the immediately preceding time code, time codes after the immediately preceding time code may be omitted.

When the processing of step S104 is complete, the first display control unit 121 then displays the speaker and an utterance section (step S105). More specifically, when the processing of step S104 is complete, the first display control unit 121 stops displaying the portal screen 20 on the display unit 140, and displays the editing support screen 10 on the display unit 140. Then, the first display control unit 121 displays the speaker and the utterance section corresponding to the speaker in association with each other in the editing support screen 10.

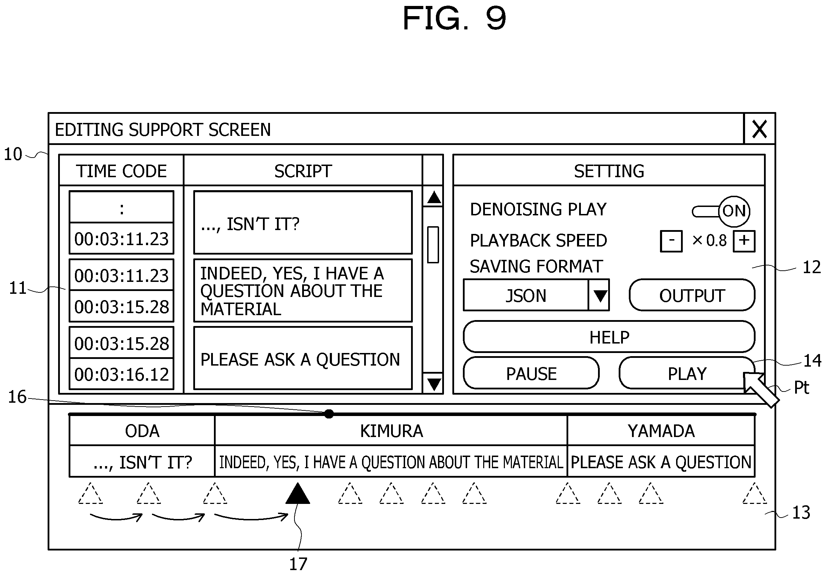

Therefore, as illustrated in FIG. 9, the display unit 140 displays the editing support screen 10. The editing support screen 10 includes a script area 11, a setting area 12, an editing area 13, a play button 14, and the like. The first display control unit 121 displays each speaker and the utterance section corresponding to each speaker in the sentence in association with each other in the editing area 13 of the editing support screen 10 on the basis of the sentence data and the speaker data.

In the script area 11, the time code and the characters of the sentence data stored in the sentence storage unit 113 are displayed in a state of being associated with each other. In particular, in the script column in the script area 11, characters from the first time code in which the speaker ID is switched to the last time code in which the continuity of the speaker ID stops are displayed in a combined manner in a time series. In the setting area 12, setting items related to a reproduction format of the voice data, setting items related to an output format of the sentence data after the speaker is edited, and the like are displayed.

As described above, the speaker and the utterance section are displayed in association with each other in the editing area 13. For example, a speaker "Oda" and an utterance section "..., isn't it?" are displayed in association with each other in the editing area 13. Similarly, a speaker "Kimura" and an utterance section "indeed, yes, I have a question about the material" are displayed in association with each other. A speaker "Yamada" and an utterance section "please ask a question" are displayed in association with each other.

Furthermore, in the editing area 13, a progress mark 16 and a switching point 17 are displayed in addition to the speakers and the utterance sections. The progress mark 16 is a mark indicating the current playback position of the voice data. The switching point 17 is a point indicating switching of a word block (see FIG. 8). For example, the switching point 17 is displayed at the position between two word blocks where a word block switches to another word block. Although one switching point 17 is displayed in the present embodiment, a plurality of switching points may be displayed, and one of the plurality of switching points may be set as the current switching point 17, and a color different from that of the remaining switching points may be applied, for example. This allows the user to confirm at which position the word block is switched.

The switching point 17 can be moved to the left or right in response to operation performed on the input unit 130. For example, when the user performs operation of pressing a cursor key indicating a right arrow, the first display control unit 121 moves the switching point 17 to the right. When the user performs operation of pressing a cursor key indicating a left arrow, the first display control unit 121 moves the switching point 17 to the right. Note that, in the case of moving the switching point 17 in one direction on the right side, a key for moving the switching point 17 may be a space key. It is sufficient if the key for moving the switching point 17 is appropriately determined according to the design, experiment, and the like.

When the processing of step S105 is complete, the voice reproduction unit 125 then waits until a reproduction instruction is detected (NO in step S106). When the voice reproduction unit 125 detects a reproduction instruction (YES in step S106), it reproduces the voice data (step S107). More specifically, when the play button 14 (see FIG. 9) is pressed with the pointer Pt, the voice reproduction unit 125 detects the instruction for reproducing the voice data, and starts reproducing the voice data. When the reproduction of the voice data starts, the progress mark 16 (see FIG. 9) moves to the right according to the reproduction speed of the voice data. The user moves the switching point 17 to perform operation of specifying the position to edit the speaker while reproducing the voice data of the conference and listening to the voice.

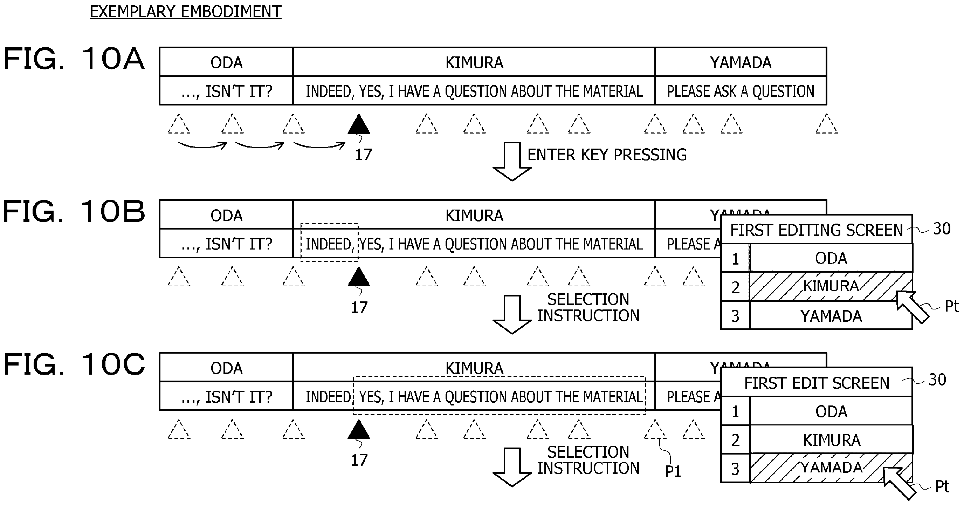

When the processing of step S107 is complete, the first display control unit 121 waits until a start point is specified (NO in step S108). When the start point is specified (YES in step S108), the first display control unit 121 displays a first editing screen (step S109). More specifically, as illustrated in FIG. 10(a), the user first moves the switching point 17, and stops it at an appointed position where editing of the speaker is desired. When the user performs operation of pressing an enter key at the appointed position, for example, the first display control unit 121 determines that the appointed position has been specified as a start point. When the start point is specified, the first display control unit 121 superimposes the first editing screen 30 on the editing area 13 and displays it as illustrated in FIG. 10(b). The first editing screen 30 is a screen that requests the user to perform an editing process. Furthermore, in addition to the display of the first editing screen 30, the first display control unit 121 identifies, in the utterance section corresponding to the start point, a partial utterance section corresponding to one or a plurality of word blocks located before the start point. In the present embodiment, the first display control unit 121 identifies a partial utterance section corresponding to one word block "indeed". Note that the display of the first editing screen 30 and the identification of the partial utterance section may be in reverse order.

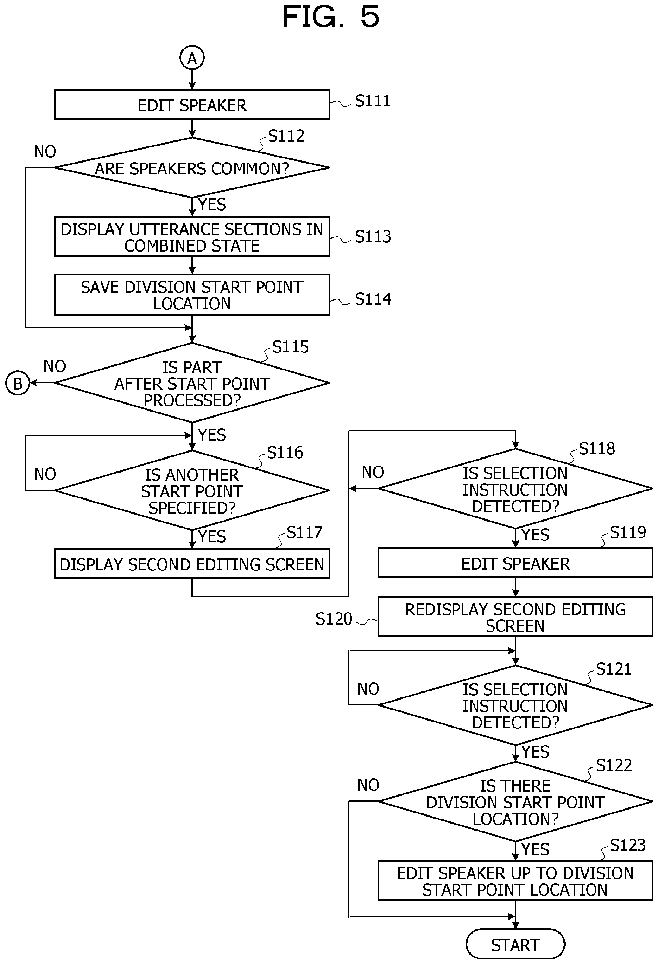

When the processing of step S109 is complete, the speaker editing unit 126 waits until a selection instruction is detected (NO in step S110). When the speaker editing unit 126 detects a selection instruction (YES in step S110), as illustrated in FIG. 5, it edits the speaker (step S111). More specifically, as illustrated in FIG. 10(b), when the user operates the input unit 130 to perform operation of selecting one of a plurality of speakers included in the first editing screen 30 with the pointer Pt, the speaker editing unit 126 detects the selection instruction. The user may perform operation of selecting one of a plurality of values included in the first editing screen 30 using a numeric keypad.

Here, the speakers included in the first editing screen 30 arranged side by side in order of precedence according to at least one of the utterance order and the utterance volume. For example, it is assumed that a speaker of a moderator in the conference tends to utter earlier than other speakers, and tends to have larger utterance volume. Accordingly, on the first editing screen 30, the speakers are arranged side by side in descending order of possibility of editing. This makes it possible to reduce the time and effort of the editing process of the speaker.

When the speaker editing unit 126 detects the selection instruction, it determines that the editing process has occurred, applies the editing process to the partial utterance section identified by the first display control unit 121, edits the speaker of the partial utterance section to be the selected speaker, and displays it. In the present embodiment, the speaker editing unit 126 applies the editing process to the partial utterance section corresponding to the word block "indeed", edits the speaker "Kimura" of the partial utterance section to be the selected speaker "Kimura", and displays it. Note that, since there is no substantial change in this example, detailed descriptions will be given later.

When the processing of step S111 is complete, the speaker editing unit 126 determines whether or not the speakers are common (step S112). More specifically, the speaker editing unit 126 determines whether or not the edited speaker and the speaker of the previous utterance section located immediately before the partial utterance section corresponding to the word block of the edited speaker are common. In the present embodiment, the speaker editing unit 126 determines whether or not the edited speaker "Kimura" and the speaker "Oda" of the previous utterance section "..., isn't it?" located immediately before the partial utterance section corresponding to the word block "indeed" of the edited speaker "Kimura" are common. Here, the speaker "Kimura" and the speaker "Oda" are not common, and thus the speaker editing unit 126 determines that the speakers are not common (NO instep S112).

If the speakers are not common, the speaker editing unit 126 skips the processing of steps S113 and S114, and determines whether or not the part after the start point has been processed (step S115). If the speaker editing unit 126 determines that the part after the start point has not been processed (NO in step S115), the first display control unit 121 executes the processing of step S109 as illustrated in FIG. 4. For example, as illustrated in FIG. 10(b), in the utterance section corresponding to the start point specified by the switching point 17, the partial utterance section corresponding to one word block "indeed" located before the start point is to be subject to the editing process of the speaker in the processing of the first step S109. However, in the utterance section corresponding to the start point specified by the switching point 17, the remaining utterance section corresponding to a plurality of word blocks "yes, I have a question about the material" located after the start point is not subject to the editing process of the speaker. Therefore, the speaker editing unit 126 determines that the part after the start point has not been processed, and the first display control unit 121 again superimposes the first editing screen 30 on the editing area 13 and displays it as illustrated in FIG. 10(c). Furthermore, in addition to the display of the first editing screen 30, the first display control unit 121 identifies, in the utterance section corresponding to the start point, the remaining utterance section corresponding to one or a plurality of word blocks located after the start point. In the present embodiment, the first display control unit 121 identifies the remaining utterance section corresponding to the plurality of word blocks "yes, I have a question about the material".

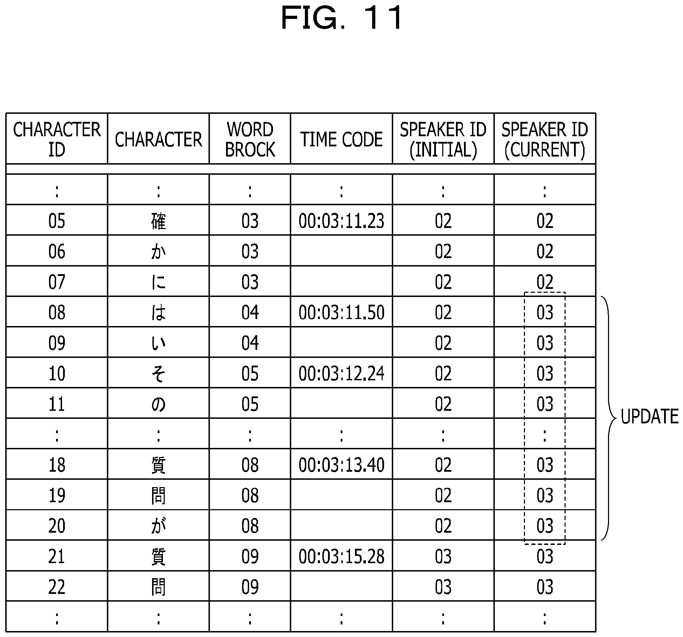

When the second processing of step S109 is complete and the speaker editing unit 126 detects a selection instruction in the processing of step S110, the speaker editing unit 126 edits the speaker in the processing of step S111 (see FIG. 5). More specifically, as illustrated in FIG. 10(c), when the user operates the input unit 130 again to perform operation of selecting one of the plurality of speakers included in the first editing screen 30 with the pointer Pt, the speaker editing unit 126 detects the selection instruction. When the speaker editing unit 126 detects the selection instruction, it accesses the sentence storage unit 113, and updates the speaker ID (current) of the speaker corresponding to the specified word block to be the speaker ID of the edited speaker as illustrated in FIG. 11. Furthermore, when the speaker editing unit 126 detects the selection instruction, it determines that the editing process has occurred, applies the editing process to the specified remaining utterance section, edits the speaker of the remaining utterance section to be the selected speaker, and displays it. In the present embodiment, the speaker editing unit 126 applies the editing process to the remaining utterance section corresponding to the plurality of word blocks "yes, I have a question about the material", edits the speaker "Kimura" of the remaining utterance section to be the selected speaker "Yamada", and displays it.

When the processing of step S111 is complete, the speaker editing unit 126 again determines whether or not the speakers are common in the processing of step S112. In the present embodiment, the speaker editing unit 126 determines whether or not the edited speaker "Yamada" and the speaker "Yamada" of the utterance section "please ask a question" located immediately after the remaining utterance section corresponding to the plurality of word blocks "yes, I have a question about the material" of the edited speaker "Yamada" are common. Here, the two speakers "Yamada" are common, and thus the speaker editing unit 126 determines that the speakers are common (YES in step S112).

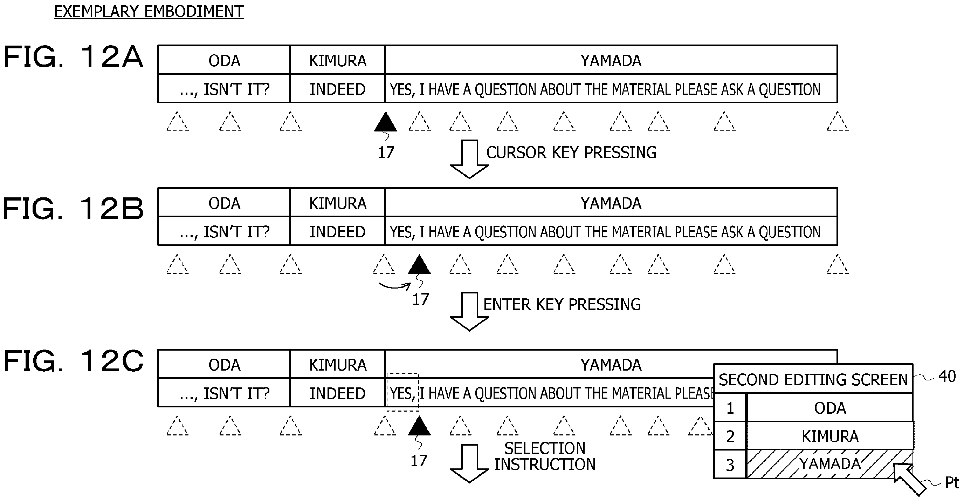

If the speakers are common, the speaker editing unit 126 displays the utterance sections in a combined state (step S113). More specifically, the speaker editing unit 126 displays the utterance sections of the common two speakers after the editing in a combined state. At the same time, the speaker editing unit 126 displays one of the two speakers associated with the respective two utterance sections before the combination in association with the combined utterance section. As a result, the speaker editing unit 126 combines the remaining utterance section corresponding to the plurality of word blocks "yes, I have a question about the material" and the subsequent utterance section "please ask a question", and displays the two utterance sections in a state of being combined as a new utterance section "yes, I have a question about the material please ask a question" as illustrated in FIG. 12(a). Furthermore, it displays one speaker in association with the combined utterance section. In this manner, the speakers are edited and the utterance sections are combined. In particular, processing directed to the part after the start point specified by the switching point 17 is dynamically required after the processing directed to the part before the start point is complete so that the editing work is performed in a time series, thereby suppressing the time and effort of the editing work.

When the processing of step S113 is complete, the point management unit 127 then saves the division start point location (step S114). More specifically, the point management unit 127 sets the location of the start point for specifying the division of the two utterance sections before combining the utterance sections as division start point location data, and saves it together with the start point corresponding to the location and the end point of the combined utterance section in the point storage unit 115. As a result, the point storage unit 115 stores the division start point location data.

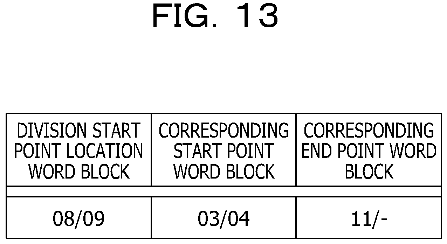

In the present embodiment, as illustrated in FIG. 10(c), the division start point location between the two utterance sections before combining the utterance sections corresponds to a start point P1 between the utterance section "indeed, yes, I have a question about the material" and the utterance section "please ask a question". Accordingly, as illustrated in FIG. 13, the point storage unit 115 stores, as division start point location data, an identifier "08" of the word block "a question" at the end of the utterance section and an identifier "09" of the word block "a question" at the beginning of the utterance section in association with each other. Furthermore, together with the storing of the division start point location data, the point storage unit 115 stores the identifiers of the word blocks capable of identifying the start point corresponding to the division start point location and the end point of the combined utterance section. For example, the point storage unit 115 stores an identifier "03" of the word block "indeed" and an identifier "04" of the word block "yes" as word blocks capable of identifying the start point. Furthermore, the point storage unit 115 stores an identifier "11" of the word block "a question" and a predetermined identifier "-" as identifiers of the word blocks capable of identifying the end point. Note that the character ID may also be used as an identifier in a similar manner instead of the identifier of the word block.

When the processing of step S114 is complete, the speaker editing unit 126 again determines whether or not the part after the start point has been processed in the processing of step S115. If the speaker editing unit 126 determines that the part after the start point has been processed (YES in step S115), the second display control unit 128 then waits until another start point is specified (NO in step S116). When another start point is specified (YES in step S116), the second display control unit 128 displays a second editing screen (step S117). More specifically, as illustrated in FIG. 12(b), when the user moves the switching point 17, and stops it at another position different from the appointed position described above to perform operation of pressing the enter key, the second display control unit 128 determines that the another position has been specified as a start point. When the another start point is specified, the second display control unit 128 superimposes the second editing screen 40 on the editing area 13 and displays it as illustrated in FIG. 12(c). The second editing screen 40 is a screen that requests the user to perform an editing process. Speakers included in the second editing screen 40 are lined up in a similar manner to the first editing screen 30. Furthermore, in addition to the display of the second editing screen 40, the second display control unit 128 identifies, in the utterance section corresponding to the start point, a partial utterance section corresponding to one or a plurality of word blocks located before the start point. In the present embodiment, the second display control unit 128 identifies a partial utterance section corresponding to one word block "yes". Note that the display of the second editing screen 40 and the identification of the partial utterance section may be in reverse order.

When the processing of step S117 is complete, the speaker editing unit 126 waits until a selection instruction is detected (NO in step S118). When the speaker editing unit 126 detects a selection instruction (YES in step S118), it edits the speaker (step S119). More specifically, as illustrated in FIG. 12(c), when the user operates the input unit 130 to perform operation of selecting one of the plurality of speakers included in the second editing screen 40 with the pointer Pt, the speaker editing unit 126 detects the selection instruction. The user may perform operation of selecting one of a plurality of values included in the second editing screen 40 using a numeric keypad. When the speaker editing unit 126 detects the selection instruction, it determines that the editing process has occurred, applies the editing process to the specified partial utterance section, edits the speaker of the partial utterance section to be the selected speaker, and displays it. In the present embodiment, the speaker editing unit 126 applies the editing process to the partial utterance section corresponding to the word block "yes", edits the speaker "Yamada" of the partial utterance section to be the selected speaker "Yamada", and displays it. Note that, since there is no substantial change in this example, detailed descriptions will be given later.

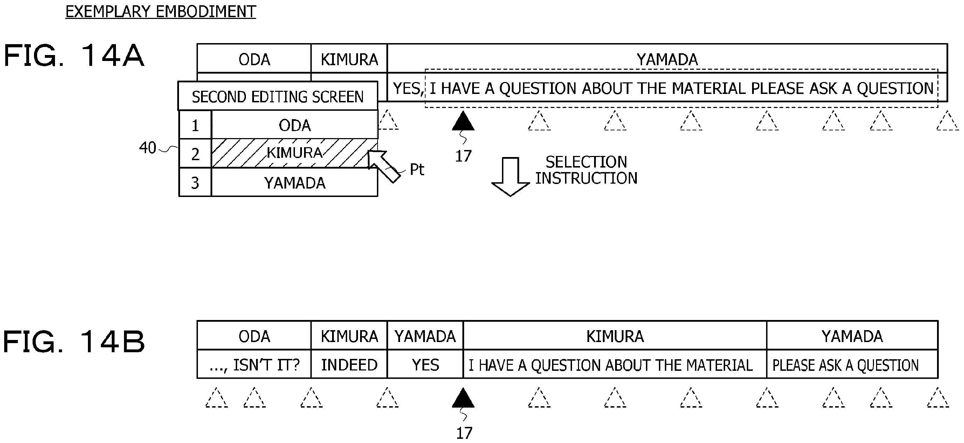

When the processing of step S119 is complete, the second display control unit 128 redisplays the second editing screen (step S120). More specifically, as illustrated in FIG. 14(a), the second display control unit 128 superimposes the second editing screen 40 on the editing area 13 and redisplays it. Furthermore, in addition to the redisplaying of the second editing screen 40, the second display control unit 128 identifies, in the utterance section corresponding to the another start point, the remaining utterance section corresponding to one or a plurality of word blocks located after the another start point as a specific utterance section. In the present embodiment, the second display control unit 128 identifies the remaining utterance section corresponding to the plurality of word blocks "I have a question about the material please ask a question" as a specific utterance section. Note that the redisplaying of the second editing screen 40 and the identification of the remaining utterance section may be in reverse order.

When the processing of step S120 is complete, the speaker editing unit 126 waits until a selection instruction is detected (NO in step S121). When the speaker editing unit 126 detects a selection instruction (YES in step S121), the point management unit 127 determines whether or not there is a division start point location (step S122). More specifically, the point management unit 127 refers to the point storage unit 115 to determine whether or not division start point location data is stored in the point storage unit 115.

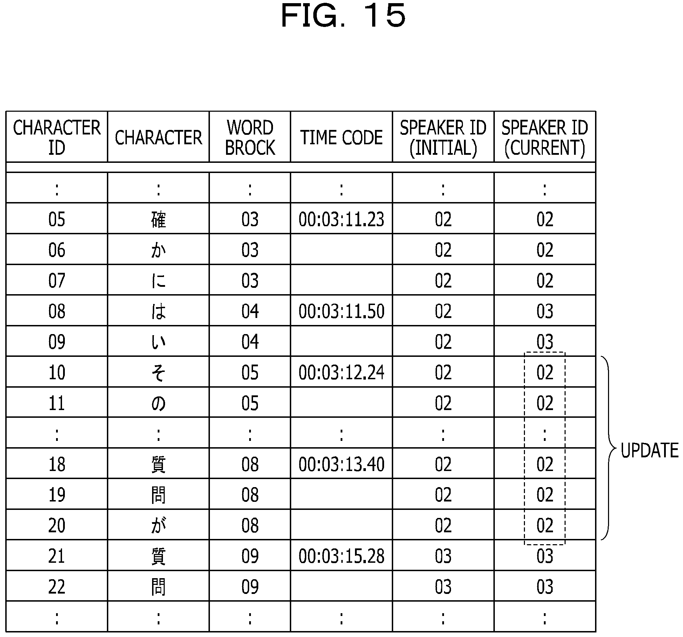

If the point management unit 127 determines that there is a division start point location (YES in step S122), the speaker editing unit 126 edits the speaker up to the division start point location (step S123), and terminates the process. More specifically, as illustrated in FIG. 14(a), when the user operates the input unit 130 to perform operation of selecting one of the plurality of speakers included in the second editing screen 40 with the pointer Pt, the speaker editing unit 126 detects the selection instruction. When the speaker editing unit 126 detects the selection instruction, it accesses the sentence storage unit 113. Then, as illustrated in FIG. 15, the speaker editing unit 126 applies the editing process to the speaker ID (current) of the speaker corresponding to, among the specified word blocks, those from the word block immediately after the another start point to the word block immediately before the division start point location, and updates the speaker ID to be the speaker ID of the edited speaker.

Furthermore, when the speaker editing unit 126 detects the selection instruction, it determines that the editing process has occurred, applies the editing process to the specific utterance section, edits the speaker of the specific utterance section to be the selected speaker, and displays it. In the present embodiment, as illustrated in FIG. 14 (b), the speaker editing unit 126 applies the editing process to the specific utterance section corresponding to the plurality of word blocks "I have a question about the material", edits the speaker "Yamada" of the specific utterance section to be the selected speaker "Kimura", and displays it.

On the other hand, if the point management unit 127 determines that there is no division start point location (NO in step S122), the speaker editing unit 126 skips the processing of step S123, and terminates the process. Note that, if there is no division start point location, the speaker editing unit 126 may terminate the process after executing error processing.

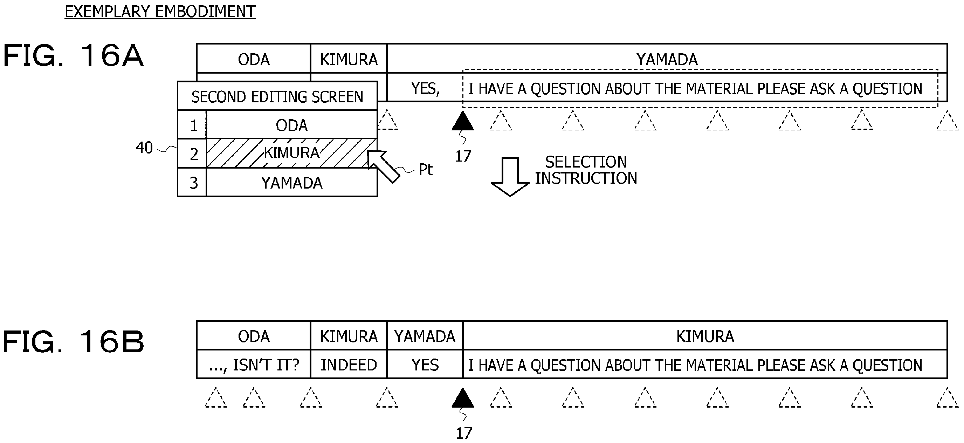

FIGs. 16(a) and 16(b) are diagrams for explaining a comparative example. In particular, FIGs. 16(a) and 16(b) are diagrams corresponding to FIGs. 14(a) and 14(b) described above. As described above, in the first embodiment, it has been described that the point management unit 127 saves and manages the division start point location data in the point storage unit 115. For example, in a case where the division start point location data is not managed, when the user operates the input unit 130 to perform operation of selecting one of the plurality of speakers included in the second editing screen 40 with the pointer Pt, the speaker editing unit 126 detects the selection instruction, as illustrated in FIG. 16(a). When the speaker editing unit 126 detects the selection instruction, it edits the speaker of the remaining utterance section corresponding to all the plurality of word blocks specified by the second display control unit 128 to the selected speaker, and displays it. In the comparative example, as illustrated in FIG. 16(b), the speaker editing unit 126 edits the speaker "Yamada" of the remaining utterance section corresponding to a plurality of word blocks "I have a question about the material please ask a question" to the selected speaker "Kimura", and displays it. Accordingly, a plurality of word blocks "please ask a question", which has no error in the speaker, are also edited, whereby the user needs to perform editing work for this part again. However, according to the first embodiment, such useless editing work does not occur. For example, according to the first embodiment, the convenience of the editing process for the identification result of the speaker improves as compared with the comparative example.

As described above, according to the first embodiment, the terminal device 100 includes the processing unit 120, and the processing unit 120 includes the first display control unit 121, the speaker editing unit 126, and the second display control unit 128. The first display control unit 121 displays, on the display unit 140, the information indicating the speaker identified with respect to the sentence data generated on the basis of voice recognition and the utterance section corresponding to the identified speaker in the sentence data in association with each other. In a case where an editing process of editing the identification result of the speaker occurs and respective speakers of two or more adjacent utterance sections are common by the editing process, the speaker editing unit 126 displays, on the display unit 140, the two or more adjacent utterance sections in a combined state. In a case where a start point of the utterance section for performing the editing process of editing the identification result of the speaker is specified for a specific utterance section within the combined two or more utterance sections, and in a case where there is a location corresponding to a start point of any of the two or more sections before the combination between the specified start point and the end point of the combined two or more utterance sections, the second display control unit 128 applies the editing process to the utterance section from the specified start point to that location. This makes it possible to improve the convenience of the editing process for the identification result of the speaker.

In particular, in a case where a learned model or a predetermined voice model is used to identify a speaker and the speaker utters a short word block, characteristics of the voice of the speaker may not be sufficiently discriminated, and the speaker may not be identified accurately. Examples of the short word block include a word block of about several characters, such as "yes". In a case where the speaker cannot be identified accurately, there is a possibility that the terminal device 100 displays an erroneous identification result. Even in such a case, according to the present embodiment, it becomes possible to improve the convenience of an editing process for an identification result of a speaker.

### (Second Embodiment)

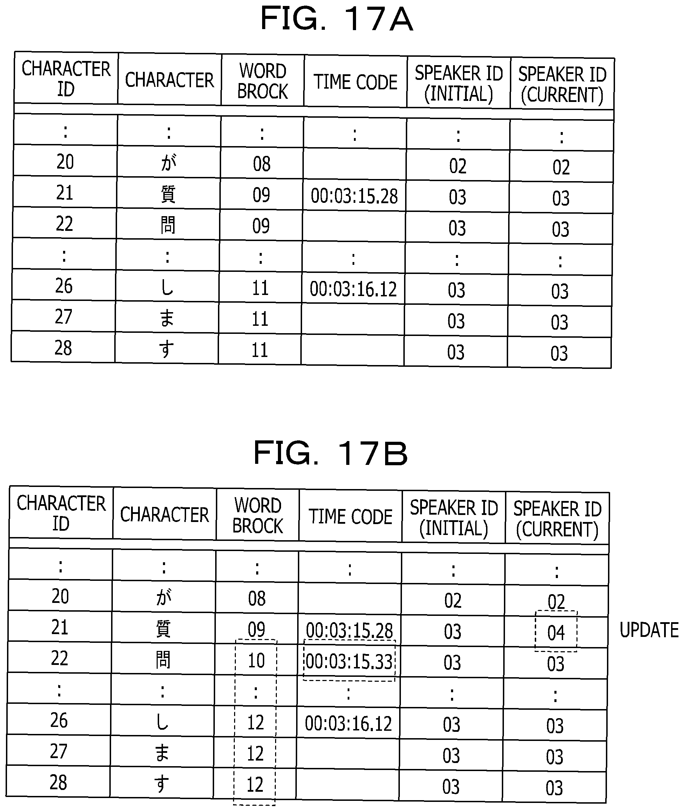

Next, a second embodiment of the present case will be described with reference to FIG. 17. FIG. 17(a) is exemplary sentence data before update according to the second embodiment. FIG. 17(b) is exemplary updated sentence data according to the second embodiment. While the speaker editing unit 126 edits a speaker in units of one or a plurality of word blocks in the first embodiment, the speaker may be edited in units of characters included in the word block. In this case, it is sufficient if the switching point 17 described above is moved in units of characters.

For example, regarding the characters "ques-" and "-tion" (Chinese characters) having a common identifier "09" of the word block as illustrated in FIG. 17(a), the speaker editing unit 126 updates speaker ID "03" of speaker ID (current) of the character "ques" to speaker ID "04" that identifies a speaker "Kagawa" (not illustrated) as illustrated in FIG. 17(b). In this case, the speaker editing unit 126 divides the identifier of the word block, and reassigns identifiers of subsequent word blocks. Specifically, as illustrated in FIG. 17(b), the speaker editing unit 126 reassigns the identifier "09" of the word block of the character "-tion (Chinese character)" to be an identifier "10". Subsequent identifiers are treated in a similar manner. Furthermore, the speaker editing unit 126 is capable of estimating an utterance time of a new word block on the basis of the utterance time of the original word block. For example, the speaker editing unit 126 is capable of estimating the utterance time of the original word block + the number of characters × several milliseconds as an utterance time of a new word block.

As described above, according to the second embodiment, it becomes possible to improve the convenience of an editing process for an identification result of a speaker even in the case of editing the speaker in units of characters.

### (Third Embodiment)

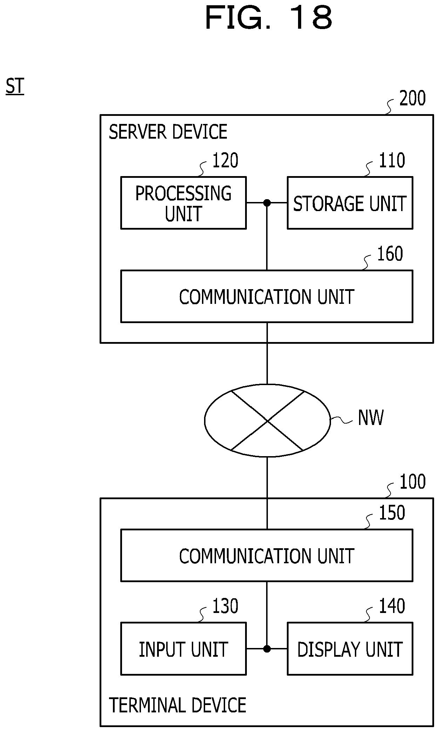

Next, a third embodiment of the present case will be described with reference to FIG. 18. FIG. 18 is an example of an editing support system ST. Note that components similar to respective parts of the terminal device 100 illustrated in FIG. 3 are denoted by the same reference signs, and descriptions thereof will be omitted.

The editing support system ST includes a terminal device 100 and a server device 200. The terminal device 100 and the server device 200 are connected via a communication network NW. Examples of the communication network NW include a local area network (LAN), the Internet, and the like.

As illustrated in FIG. 18, the terminal device 100 includes an input unit 130, a display unit 140, and a communication unit 150. Meanwhile, the server device 200 includes a storage unit 110, a processing unit 120, and a communication unit 160. Both of the two communication units 150 and 160 may be constructed by a network I/F 100D or a short-range wireless communication circuit 100J. As described above, the storage unit 110 and the processing unit 120 described in the first embodiment may be included in the server device 200 instead of the terminal device 100. For example, the server device 200 may be used as an editing support device.

In this case, the input unit 130 of the terminal device 100 is operated, and the voice data of the conference described above is stored in the storage unit 110 (more specifically, voice storage unit 111) via the two communication units 150 and 160. Furthermore, the input unit 130 is operated, and the voice data of the speaker described above is input to the processing unit 120 (more specifically, speaker identification unit 124) via the two communication units 150 and 160.

The processing unit 120 accesses the storage unit 110, obtains voice data of a conference, and performs various kinds of processing described in the first embodiment on the voice data of the conference to generate sentence data. Furthermore, the processing unit 120 generates a learned model in which characteristics of voice of a speaker are machine-learned on the basis of input voice data of the speaker. Then, the processing unit 120 identifies the speaker on the basis of the voice data of the conference and the learned model. The processing unit 120 outputs, to the communication unit 160, screen information of an editing support screen 10 that displays the identified speaker and the utterance section corresponding to the speaker in association with each other as a processing result. The communication unit 160 transmits the processing result to the communication unit 150, and the communication unit 150 outputs screen information to the display unit 140 upon reception of the processing result. As a result, the display unit 140 displays the editing support screen 10.

As described above, the terminal device 100 may not include the storage unit 110 and the processing unit 120, and the server device 200 may include the storage unit 110 and the processing unit 120. Furthermore, the server device 200 may include the storage unit 110, and another server device (not illustrated) connected to the communication network NW may include the processing unit 120. Such a configuration may be used as an editing support system. Even in such an embodiment, it becomes possible to improve the convenience of an editing process for an identification result of a speaker.

Although the preferred embodiments of the present invention have been described in detail thus far, the present invention is not limited to specific embodiments according to the present invention, and various modifications and alterations may be made within the scope of the gist of the present invention described in the claims. For example, in the embodiment described above, it has been described that the first editing screen 30 is successively and dynamically displayed. Meanwhile, the switching point 17 may be moved with a cursor key, and the first editing screen 30 may be displayed each time the enter key is pressed. Such control may be applied to the second editing screen 40. Furthermore, in a case where participant data is not registered, an identification character or an identification symbol may be adopted as an identification result instead of a speaker.

## Claims

1. An editing support program for causing a computer to execute a process comprising:
displaying, on a display unit, information that indicates a speaker identified with regard to a sentence generated on the basis of voice recognition in association with a section within the sentence, the section corresponding to the identified speaker;
in a case where a first editing process that edits an identification result of the speaker occurs and respective speakers of adjacent two or more sections are common due to the first editing process, displaying the adjacent two or more sections in a combined state on the display unit; and
in a case where a start point of a section to be subject to a second editing process that edits the identification result of the speaker is specified with regard to a specific section within the combined two or more sections and a location that corresponds to a start point of any of the two or more sections before being combined is present between the specified start point and an end point of the combined two or more sections, applying the second editing process to a section from the specified start point to the location that corresponds to the start point of any of the two or more sections.

2. The editing support program according to claim 1, wherein
in a case where the first editing process occurs and the respective speakers of the adjacent two or more sections are common due to the first editing process, the first editing process is applied to the adjacent two or more sections, and the adjacent two or more sections are displayed on the display unit in a combined state.

3. The editing support program according to claim 1 or 2, wherein
a first editing screen that requests the first editing process and a second editing screen that requests the second editing process are displayed on the display unit, and
the first editing process is applied to the adjacent two or more sections on the basis of an instruction to the first editing screen, and the second editing process is applied to the section from the specified start point to the location that corresponds to the start point of any of the two or more sections on the basis of an instruction to the second editing screen.

4. The editing support program according to claim 3, wherein
both of the first editing screen and the second editing screen include information that indicates the speaker as an editing target, and the information that indicates the speaker is arranged in order of precedence according to at least one of utterance order and utterance volume of the speaker.

5. The editing support program according to any one of claims 1 to 4, wherein
in a case where the first editing process occurs in a middle of the section that corresponds to the speaker, the respective speakers of the two or more sections adjacent before the middle of the section are common due to the first editing process, and the respective speakers of the two or more adjacent sections adjacent after the middle of the section are common, the two or more sections adjacent after the middle of the section are displayed on the display unit in a combined state after the two or more sections adjacent before the middle of the section are displayed on the display unit in a combined state.

6. The editing support program according to any one of claims 1 to 5, wherein
the sentence is generated on the basis of voice of the speaker and the voice recognition, and
the speaker is identified with regard to the generated sentence on the basis of the voice of the speaker and a learned model in which a characteristic of the voice of the speaker is learned.

7. The editing support program according to any one of claims 1 to 6, further comprising:
storing, in a storage unit, the specified start point and the location that corresponds to the start point of any of the two or more sections, wherein
with reference to the storage unit, the second editing process is applied to the section from the specified start point to the location that corresponds to the start point of any of the two or more sections.

8. A method of supporting editing for causing a computer to execute a process comprising:
displaying, on a display unit, information that indicates a speaker identified with regard to a sentence generated on the basis of voice recognition in association with a section within the sentence, the section corresponding to the identified speaker;
in a case where a first editing process that edits an identification result of the speaker occurs and respective speakers of adjacent two or more sections are common due to the first editing process, displaying the adjacent two or more sections in a combined state on the display unit; and
in a case where a start point of a section to be subject to a second editing process that edits the identification result of the speaker is specified with regard to a specific section within the combined two or more sections and a location that corresponds to a start point of any of the two or more sections before being combined is present between the specified start point and an end point of the combined two or more sections, applying the second editing process to a section from the specified start point to the location that corresponds to the start point of any of the two or more sections.

9. An editing support device comprising:
a processing unit that executes a process including:
displaying, on a display unit, information that indicates a speaker identified with regard to a sentence generated on the basis of voice recognition in association with a section within the sentence, the section corresponding to the identified speaker;
in a case where a first editing process that edits an identification result of the speaker occurs and respective speakers of adjacent two or more sections are common due to the first editing process, displaying the adjacent two or more sections in a combined state on the display unit; and
in a case where a start point of a section to be subject to a second editing process that edits the identification result of the speaker is specified with regard to a specific section within the combined two or more sections and a location that corresponds to a start point of any of the two or more sections before being combined is present between the specified start point and an end point of the combined two or more sections, applying the second editing process to a section from the specified start point to the location that corresponds to the start point of any of the two or more sections.

10. The editing support device according to claim 9, wherein
in a case where the first editing process occurs and the respective speakers of the adjacent two or more sections are common due to the first editing process, the processing unit applies the first editing process to the adjacent two or more sections, and displays the adjacent two or more sections on the display unit in a combined state.

11. The editing support device according to claim 9 or 10, wherein
the processing unit displays, on the display unit, a first editing screen that requests the first editing process and a second editing screen that requests the second editing process, applies the first editing process to the adjacent two or more sections on the basis of an instruction to the first editing screen, and applies the second editing process to the section from the specified start point to the location that corresponds to the start point of any of the two or more sections on the basis of an instruction to the second editing screen.

12. The editing support device according to claim 11, wherein
the processing unit operates in such a manner that both of the first editing screen and the second editing screen include information that indicates the speaker as an editing target, and the information that indicates the speaker is arranged in order of precedence according to at least one of utterance order and utterance volume of the speaker.

13. The editing support device according to any one of claims 9 to 12, wherein
in a case where the first editing process occurs in a middle of the section that corresponds to the speaker, the respective speakers of the two or more sections adjacent before the middle of the section are common due to the first editing process, and the respective speakers of the two or more adjacent sections adjacent after the middle of the section are common, the processing unit displays the two or more sections adjacent after the middle of the section on the display unit in a combined state after displaying the two or more sections adjacent before the middle of the section on the display unit in a combined state.

14. The editing support device according to any one of claims 9 to 13, wherein
the processing unit generates the sentence on the basis of voice of the speaker and the voice recognition, and identifies the speaker with regard to the generated sentence on the basis of the voice of the speaker and a learned model in which a characteristic of the voice of the speaker is learned.

15. The editing support device according to any one of claims 9 to 14, wherein
the processing unit stores, in a storage unit, the specified start point and the location that corresponds to the start point of any of the two or more sections, and applies the second editing process to the section from the specified start point to the location that corresponds to the start point of any of the two or more sections with reference to the storage unit.
